# EUROPÄISCHE PATENTSCHRIFT

(11) **EP 0 931 458 B1**
(45) Veröffentlichungstag und Bekanntmachung des Hinweises auf die Patenterteilung: **16.04.2003**
(21) Anmeldenummer: 99100282.5
(22) Anmeldetag: 08.01.1999
(51) Int. Cl.: A22C 11/10

(54) **Vorrichtung und Verfahren zum Trennen von Würsten**
Device and method for separating sausages
Dispositif et procédé pour séparer de saucisses

(30) Priorität: 21.01.1998 DE 19802101
(43) Veröffentlichungstag der Anmeldung: 28.07.1999
(73) Patentinhaber: Albert Handtmann Maschinenfabrik GmbH & Co. KG, 88396 Biberach (DE)
(72) Erfinder: Hummel, Karl, 88400 Biberach (DE); Schmid, Klaus, 88499 Riedlingen (DE)
(74) Vertreter: Grünecker, Kinkeldey, Stockmair & Schwanhäusser Anwaltssozietät

(56) Entgegenhaltungen:
- EP-A- 0 247 545
- DE-A- 3 104 099
- DE-A- 3 323 659
- DE-U- 9 001 075

## Beschreibung

Die Erfindung betrifft eine Vorrichtung zum Trennen von Würsten an Abteilstellen, die zwischen den Würsten eines Wurststranges gebildet sind, mit wenigstens einem ersten Trennelement auf einer ersten Seite des Wurststranges und wenigstens einem zweiten Trennelement auf der zweiten Seite des Wurststranges, wobei die Trennelemente auf Kreisbahnen gegenläufig umlaufen und so angeordnet sind, daß sie beim Umlauf derart zusammenwirken, daß der Wurststrang durchtrennt wird, entsprechend dem Oberbegriff des Anspruchs 1 und ein Verfahren zum Zerteilen von Wurststrängen.

Eine gattungsgemäße Vorrichtung ist z.B. aus der EP 0440 039 B1 bekannt. Die dort beschriebene Füllmaschine preßt durch ein Füllrohr Wurstbrät in eine schlauchförmige Wursthülle. Durch einen Abdrehmechanismus werden einzelne Wurstportionen gebildet, zwischen denen sich Abdreh- bzw. Abteilstellen befinden. Der so gebildete Wurststrang wird von zwei Endlosbändem eines sogen. Längengerätes vorwärts bewegt. Im Verlauf dieser Vorwärtsbewegung passiert der Wurststrang eine Trennvorrichtung, die die einzelnen Würste an den Abdrehstellen voneinander trennt. Bei der gattungsgemäßen Vorrichtung sind dazu rotierende Trennelemente zu beiden Seiten des Wurststranges vorgesehen, die auf Kreisbahnen umlaufen und am äußeren Ende Klingen bzw. korrespondierende Gegenhalter umfassen. DieTrennelemente sind so gelagert, daß die Klingen bzw. Gegenhalter an einem Punkt ihres Umlaufes derart zusammenwirken, daß der Wurststrang an einer Abdrehstelle durchtrennt wird. Die Transportgeschwindigkeit des Wurststranges und die Rotationsgeschwindigkeit der Trennelemente sind dabei synchronisiert bzw. dem Produkt angepaßt.

Aus DE 36 17 559 C1 ist es bekannt, Verdrängungswerkzeuge an die Abteilstelle zwischen zwei Würsten zu bringen, die Verdrängungswerkzeuge in einer linearen Bewegung zum Auseinanderziehen der Abteilstelle voneinander weg zu bewegen und die jeweiligen Wurstenden zu verschließen. Im Anschluss wird mit Hilfe eines seitlich eingreifenden Schneidwerkzeuges die Abteilstelle durchtrennt.

Oftmals sind die Würste jedoch nur durch eine sehr kurze Abdrehstelle voneinander getrennt bzw. liegen sogar vollständig aneinander an. Speziell z.B. bei Würsten in Naturdarm können die Abdrehstellen nicht immer gestreckt gehalten werden. Es entsteht dann das Problem, daß die Messer bzw. Gegenhalter die gefüllten Würste bei ihrem Eingriff verletzen würden. Für die Verarbeitung von Naturdarm ist daher die bekannte Vorrichtung nicht einsetzbar.

Aufgabe der vorliegenden Erfindung ist es daher, eine Vorrichtung und ein Verfahren zum Trennen von Würsten an Abteilstellen anzugeben, mit deren Hilfe eine sichere Trennung von Würsten eines Wurststranges, insbesondere auch Na turdarmwürsten, unabhängig von der aktuellen Beschaffenheit der Abteilstellen ohne Verletzungsgefahr für die einzelnen Würste möglich ist.

Diese Aufgabe wird durch eine gattungsgemäße Vorrichtung mit den Merkmalen des kennzeichnenden Teiles des Anspruchs 1 und durch ein Verfahren mit den Merkmalen des Anspruchs 13 gelöst.

Bei dem erfindungsgemäßen Verfahren wird der Wurststrang an eine Trennvorrichtung herangeführt und die Abteilstelle in einem gleichzeitigen Arbeitsschritt zwischen zwei Würsten auf einen gewünschten Abstand auseinandergezogen und zerschnitten. Da die einzelnen Würste während des Schneidprozesses auf einen gewünschten Abstand auseinandergezogen sind, ist ein definierter Schnitt möglich. Auch Würste, die in dem Wurststrang direkt aneinanderliegen oder nur durch eine kurze Teilstelle voneinander getrennt sind, lassen sich so präzise auseinanderschneiden, ohne daß die Gefahr besteht, daß die Messer die Wursthülle beschädigen können, so daß sich die beanspruchte Vorrichtung insbesondere für die Verarbeitung von Naturdarm eignet.

Bei der erfindungsgemäßen Vorrichtung sind dazu erste und zweite Formelemente vorgesehen. Das erste Formelement läuft dem ersten Trennelement auf dessen Kreisbahn voran, während das zweite Formelement dem zweiten Trennelement auf der anderen Seite des Wurststranges auf dessen Kreisbahn nachläuft. Die Formelemente halten während des Eingriffes des ersten und des zweiten Trennelementes die zu trennenden Würste auf einem gewünschten Abstand, während das erste und das zweite Trennelement den Wurststrang an der Abteilstelle zerschneiden. Die Summe der Abstände des ersten Formelementes von dem ersten Trennelement und dem zweiten Formelement vom zweiten Trennelement definiert dabei den Abstand, auf den der Wurststrang zwischen zwei Würsten auseinandergezogen wird. Er ist je nach Anforderung und gewünschter Präzision zu wählen. Durch die Ausbildung von Formelementen als mit dem ersten und zweiten Trennelement mitlaufend, ist gewährleistet, daß zwischen je zwei Würsten immer der gewünschte Abstand erzeugt wird, während gleichzeitig die zwei Würste voneinander getrennt werden. Zudem ist die Anordnung sehr kompakt und die Formelemente bedürfen keines zusätzlichen Antriebes. Eine zusätzliche Synchronisation der Formelemente mit den korrespondierenden Trennelementen ist aufgrund des gemeinsamen Umlaufes nicht nötig.

Sind besonders scharfe präzise Schnitte gewünscht, so ist es vorteilhaft, wenn das erste und das zweite Trennelement als Klinge ausgebildet sind. Eine besonders kostengünstige Ausgestaltung sieht dagegen vor, daß ein Trennelement eine Klinge umfaßt und das andere Trennelement auf der anderen Seite des Wurststranges einen korrespondierenden Gegenhalter.

Bei einer Ausgestaltung der Erfindung ist vorgesehen, daß sich auf der vorlaufenden Seite des zweiten Trennelementes eine konkave Ausbuchtung befindet. Die konkave Ausbuchtung tritt als erstes in Berührung mit dem Wurststrang und führt durch ihre konkave Form zu einem sicheren Auseinanderziehen der einzelnen Würste, ohne die Gefahr des Einreißens der Wursthülle.

Die einzelnen Trennelemente können fest mit der Umlaufachse verbunden sein. Gemäß einer vorteilhaften Ausgestaltung ist jedoch eines der Trennelemente federnd gelagert oder elastisch, so daß es beim Eingriff mit dem anderen Trennelement entgegen der Umlaufrichtung ausweichen kann. So ist ein reibungsloser Eingriff der ersten und zweiten Trennelemente miteinander möglich.

Bei einer vorteilhaften Ausführungsform der erfindungsgemäßen Vorrichtung umfassen die Formelemente flächige Elemente, die im wesentlichen parallel zu den jeweiligen Trennelementen ausgebildet sind. Derartige flächige Formelemente sind leicht zu fertigen und stellen eine kostengünstige Möglichkeit zur Realisierung dar.

Besonders vorteilhaft ist das erfindungsgemäße Verfahren, wenn zusätzlich zu dem Auseinanderziehen des Wurststranges an der Abteilstelle eine Zentrierung der Abteilstelle vorgenommen wird. Im speziellen bei Würsten in Naturdarm kommt es leicht zu einer Dezentrierung der Abteilstelle, so daß diese gegenüber der Längsachse des Wurststranges versetzt ist. Eine Zentrierung dieser Abteilstelle während des Schneideprozesses erhöht die Präzision und verringert die Gefahr, daß die Wursthülle an einer ungewünschten Stelle verletzt wird.

Die erfindungsgemäße Vorrichtung umfaßt dazu vorteilhafterweise Formelemente mit im wesentlichen V-förmigen, sich in Richtung des Wurststranges öffnenden Zentrierbereichen an ihren achsfernen Enden, die während des Eingriffs des ersten und des zweiten Trennelementes zu einer Zentrierung der Abteilstelle führen. Solche V-förmigen Formelemente sind einfach realisierbar und führen auf sichere Weise zur Zentrierung.

Eine einfache Ausgestaltung umfaßt jeweils einstückige Formelemente. Gemäß einer Weiterbildung der erfindungsgemäßen Vorrichtung sind die Formelemente aus verstellbaren Zentrierflügeln aufgebaut, die einen veränderbaren Winkel zwischen sich einschließen, die den jeweiligen V-förmigen Zentrierbereich bilden. Solche Zentrierflügel sind auf das Kaliber der Wurst einstellbar und stellen dabei eine besonders flexible Realisierungsmöglichkeit der Vorrichtung zur Verfügung.

Bei einer besonderen Ausführungsform ist der Antrieb für die Trennelemente mit den dazugehörigen Formelementen während eines Umlaufes drehzahlregelbar. Der Antrieb kann dabei so vorgesehen sein, daß die Trennelemente im Eingriffsbereich mit dem Wurststrang eine Geschwindigkeit haben, die der Geschwindigkeit der Transporteinrichtung für den Wurststrang entspricht. Auf diese Weise wird die Abteilstelle ohne Scherkräfte mit erhöhter Präzision auseinandergezogen und zerschnitten.

Es können eine beliebige Anzahl von ersten Trennelementen vorgesehen sein, die zusammen auf einer Achse auf einer Seite des Wurststranges umlaufen mit einer entsprechenden Anzahl von zweiten Trennelementen auf einer zweiten Achse auf der anderen Seite des Wurststranges. Besonders zweckmäßig ist jedoch eine Vorrichtung, bei welcher auf jeder Seite des Wurststranges zwei Trennelemente vorgesehen sind, die auf einer Achse umlaufen, da eine solche Anordnung eine hohe Geschwindigkeit des Trennvorganges ermöglicht, ohne daß sich die einzelnen Trennelemente einer Seite des Wurststranges behindern würden.

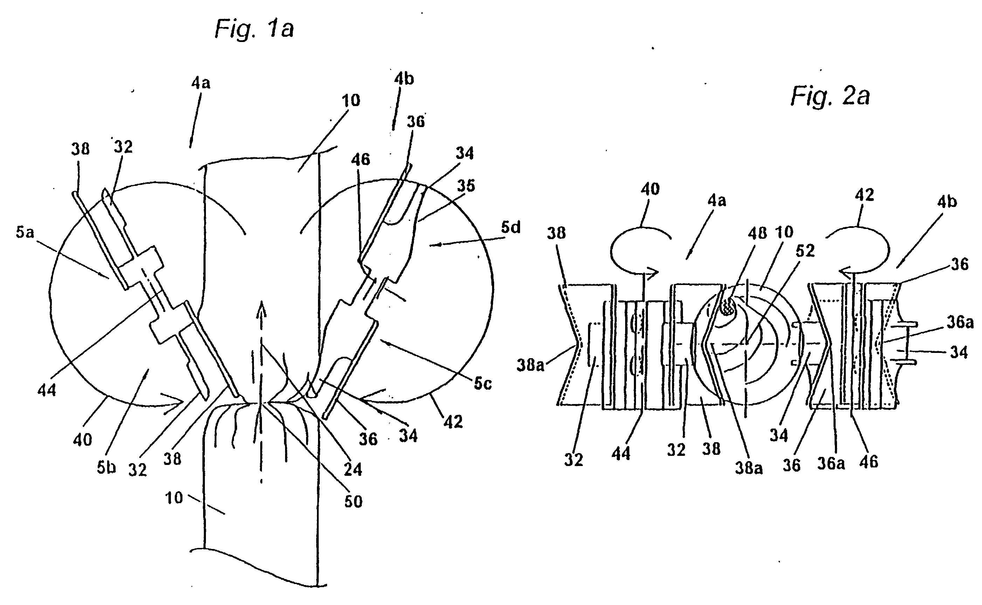

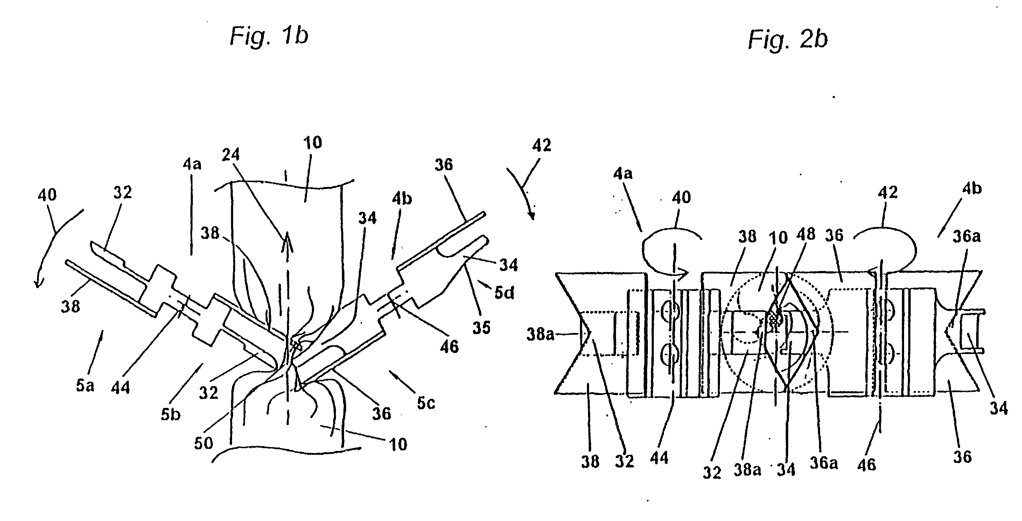

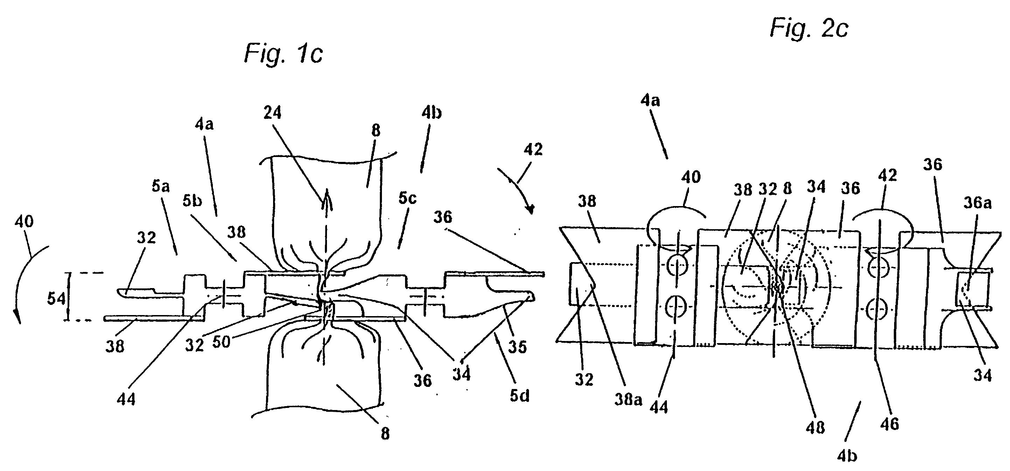

Eine Ausführungsform der erfindungsgemäßen Vorrichtung und das erfindungsgemäße Verfahren werden im folgenden anhand der anliegenden Figuren erläutert. Dabei zeigt
- Figur 1 a: ein Detail einer Trennvorrichtung zu Beginn des Eingriffs mit dem Wurststrang in Draufsicht,
- Figur 1 b: dasselbe Detail zu einem späteren Zeitpunkt in Draufsicht,
- Figur 1 c: dasselbe Detail zu einem noch späteren Zeitpunkt in Draufsicht,
- Figur 2a: dasselbe Detail der Figur 1a in einer Schnittansicht gesehen in Richtung eines anderen Wurststranges,
- Figur 2b: die gleiche Ansicht wie in Figur 2a zu einem späteren Zeitpunkt,
- Figur 2c: die gleiche Ansicht wie die Figur 2a zu einem noch späteren Zeitpunkt,
- Figur 3a: eine Ausführungsform einer Trennvorrichtung in Richtung der Bewegung eines Wurststranges gesehen,
- Figur 3b: eine Draufsicht der Figur 3a,
- Figur 4a: eine Ansicht einer zweiten Ausführungsform in Richtung der Bewegung eines Wurststranges,
- Figur 4b: dieselbe Ausführungsform in Draufsicht,
- Figur 4c: ein Detail der zweiten Ausführungsform, die Zentrierflügel zeigend,
- Figur 5: eine schematische Gesamtansicht einer Wurstbefüllungsmaschine mit einer erfindungsgemäßen Trennvorrichtung,
- Figur 6: ein Detail eines Wurststranges und
- Figur 7: ein Detail eines anderen Wurststranges.

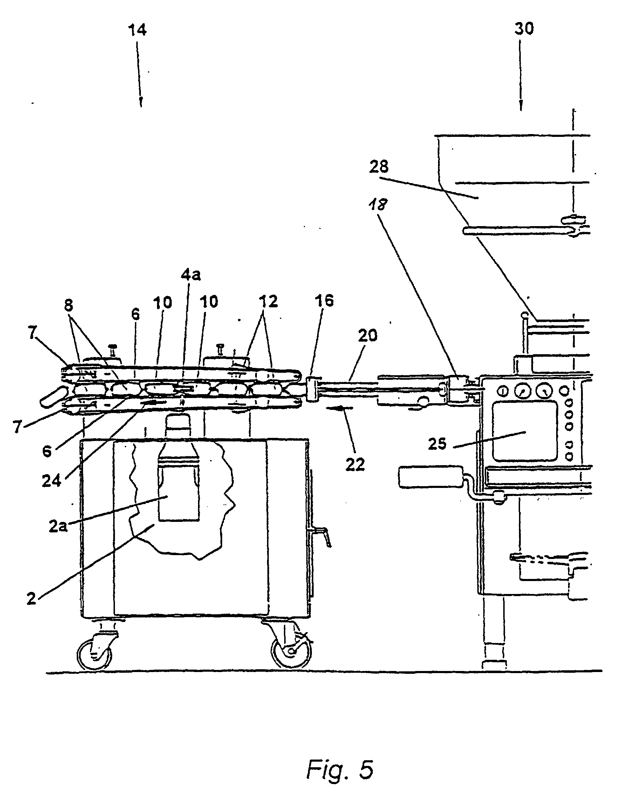

Die Gesamtansicht einer Wurstbefüllungsmaschine in Figur 5 zeigt einen Füllmaschinenhauptteil 30 mit einem Einfülltrichter 28 für das Wurstbrät. 20 bezeichnet ein Füllrohr, durch das Wurstbrät mit Hilfe einer in dem Maschinenhauptteil 30 angeordneten Flügelzellenpumpe in an sich bekannter Weise in Richtung 22 ausgestoßen wird. 16 bezeichnet ein Bremsringgetriebe, wie es z.B. aus dem europäischen Patent 0232 812 bekannt ist, welches zum Abbremsen der Wursthülle dient. 18 bezeichnet ein an sich bekanntes Abdrehgetriebe zur Bildung von Abdrehstellen zwischen den einzelnen Würsten. 12 zeigt einzelne Würste, die an den Abteilstellen, d.h. den Abdrehstellen, miteinander verbunden sind.

2 bezeichnet eine Trennvorrichtung mit unten näher beschriebenen Trennköpfen 4a, b, von denen hier nur ein Trennkopf 4a sichtbar ist. Bei dem gezeigten Zustand werden gerade zwei Würste 10 voneinander getrennt. 2a bezeichnet einen hochdynamischen drehzahlregelbaren Motor, der die umlaufenden Trennköpfe 4a, b, die sich zu beiden Seiten des Wurststranges befinden, antreibt. Die Trennköpfe 4a und 4b werden dabei von dem gemeinsamen Motor 2a der Trennvorrichtung 2 über ein hier nicht weiter interessierendes Getriebe angetrieben. Ebenso sind zwei getrennte Motoren für die Trennelemente einsetzbar. Mit 8 sind bereits getrennte Würste bezeichnet. Der Wurststrang bzw. die Würste werden von zwei Endlosbändern 6 in Richtung 24 gefördert, die von Umlenkrollen 7 angetrieben werden. Die Gesamtheit der Endlosbänder mit ihrem Antrieb und der Trennvorrichtung wird als Längengerät 14 bezeichnet.

Eine Steuerung 25 übernimmt die phasengenaue Abstimmung der Bewegungen der Trennvorrichtung 2, der Endlosbänder 6, des Füllgutausstoßes durch das Füllrohr 20 und des Abdrehgetriebes 18. Die Phasenlagen der einzelnen Bewegungen werden aus Parametern wie z.B. der gewünschten Portionslänge, der Füllgeschwindigkeit, des Kalibers oder der gewünschten Anzahl von Würsten, die zusammen eine Wurstkette bilden sollen, von der Steuerung 25 errechnet und vorgegeben.

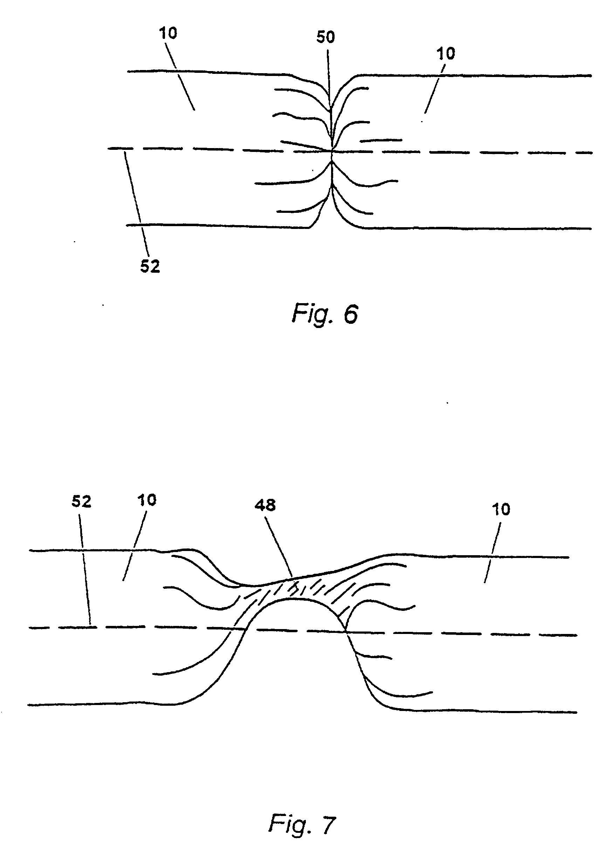

Figur 6 zeigt den Bereich einer Abteilstelle 50 zwischen zwei Würsten 10, wobei die Abteilstelle zusammengerutscht ist. 52 bezeichnet die Längsachse der Würste. Figur 7 zeigt einen Teil eines anderen Wurststranges mit einer dezentrierten Abteilstelle 48.

In den Figuren 1a bis 1c ist der Trennvorgang für eine Abteilstelle 50 entsprechend der Figur 6 in einer schematischen Draufsicht gezeigt. Die Figuren 2a bis 2c dagegen zeigen den Trennvorgang für eine Abteilstelle 48 entsprechend der Figur 7 in Richtung des sich fortbewegenden Wurststranges gesehen. Die Figuren 1a bis 1c bzw. 2a bis 2c zeigen dabei sich jeweils entsprechende Momentaufnahmen.

4a und 4b zeigen Trennköpfe auf jeder Seite des Wurststranges. Der Trennkopf 4a besteht aus zwei ersten Trennelementen 5a und 5b, während der zweite Trennkopf 4b aus zwei zweiten Trennelementen 5c und 5d besteht. Der zweite Trennkopf 4b umfaßt dabei zwei Klingen 34, deren Schneiden parallel zur Achse 46 des Trennkopfes 4b ausgerichtet sind. Der Trennkopf 4b dreht sich um die Achse 46 in der gezeigten Richtung 42. In Bewegungsrichtung hinter den Klingen 34 befinden sich die Formelemente 36 in paralleler Ausrichtung zu den Klingen 34. In Bewegungsrichtung 40 des Trennkopfes 4a sind die Klingen 34 zudem mit einer konkaven Oberfläche 35 ausgestaltet, die zur Schonung der Wurst während des Eingriffs vorgesehen ist.

Der Trennkopf 4a umfaßt je zwei Gegenhalter 32, die sich radial von der Achse 44 forterstrecken und als Gegenhalter für die Klingen 34 während des Schneidprozesses dienen.

In Bewegungsrichtung 40 vor den Gegenhaltem 32 befinden sich im wesentlichen parallel zu deren Längsausrichtung zweite Formelemente 38. Die Formelemente 38 bzw. die Formelemente 36 erstrecken sich teilweise über die Gegenhalter 32 bzw. die Klingen 34 hinaus.

Die Bewegungsrichtung des Wurststranges ist mit 24 bezeichnet 50 bezeichnet eine Abteilstelle zwischen den Würsten 10, die in Figur 1a noch nicht und in Figur 1b zu einem Teil auseinandergezogen ist.

Figur 1c zeigt zwei Würste 8, die gerade von einer Klinge 34 und einem Gegenhalter 32 auseinandergeschnitten worden sind. Während des Schneidprozesses befinden sich die einzelnen Würste 8 in einem Abstand 54 voneinander, der von den Formelementen 36 und 38 an der Abteilstelle 50 aufrechterhalten wird und z.B. in der Größenordnung von 10 bis 15 mm liegen kann .

Figur 2a zeigt in Seitenansicht die Trennköpfe 4a und 4b in dem gleichen Zustand des Bewegungsablaufes wie die Figur 1a in Draufsicht, jedoch mit einem Wurststrang, bei dem die Abdrehstelle 48 gegenüber der Achse 52 des Wurststranges versetzt ist. Ebenso zeigen die Figuren 2b bzw. 2c dieselben Zustände des zeitlichen Bewegungsablaufes der Trennköpfe 4a und 4b wie die Figuren 1b bzw. 1c in einer Ansicht entlang der Bewegungsrichtung des Wurststranges für einen Wurststrang mit versetzten Abteilstellen 48 entsprechend der Figur 7.

In den Figuren 2a bis 2c sind die V-förmigen Zentrierbereiche 36a bzw. 38a der Formelemente 36 bzw. 38 erkennbar.

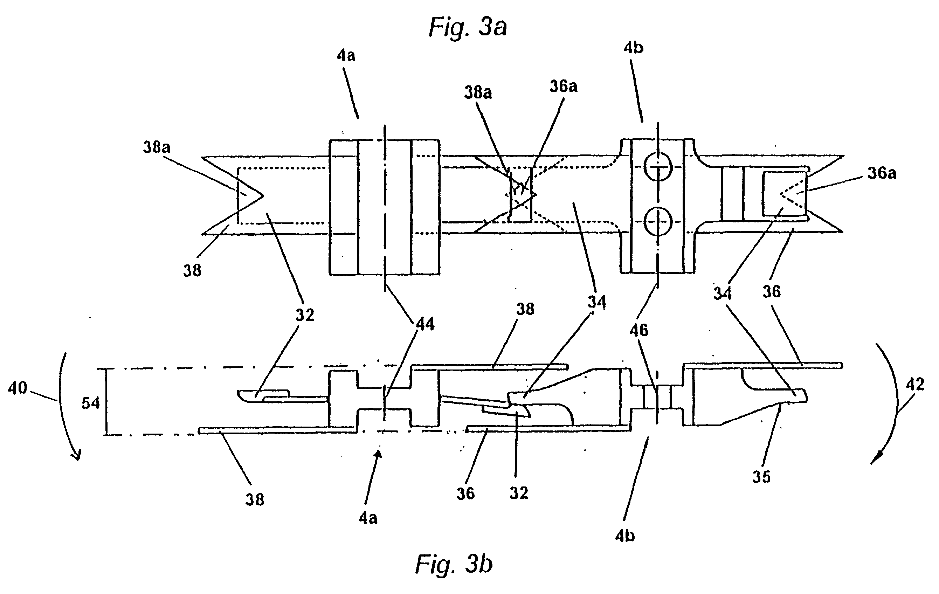

Figur 3b zeigt im Detail, wie die Gegenhalter 32 federnd gelagert sind, so daß sie entgegen der Drehrichtung 40 des ersten Trennkopfes 4a zurückfedern können. Während des Eingriffes einer Klinge 34 mit einem solchen Gegenhalter 32 federt der Gegenhalter 32 leicht zurück, um ein reibungsloses Drehen der Trennköpfe 4a, 4b zu gewährleisten. Es kann bei anderen Ausführungen auch ein feststehender Gegenhalter eingesetzt werden.

Bei der oben beschriebenen Ausführungsform sind die Formelemente 36, 38 jeweils einstückig.

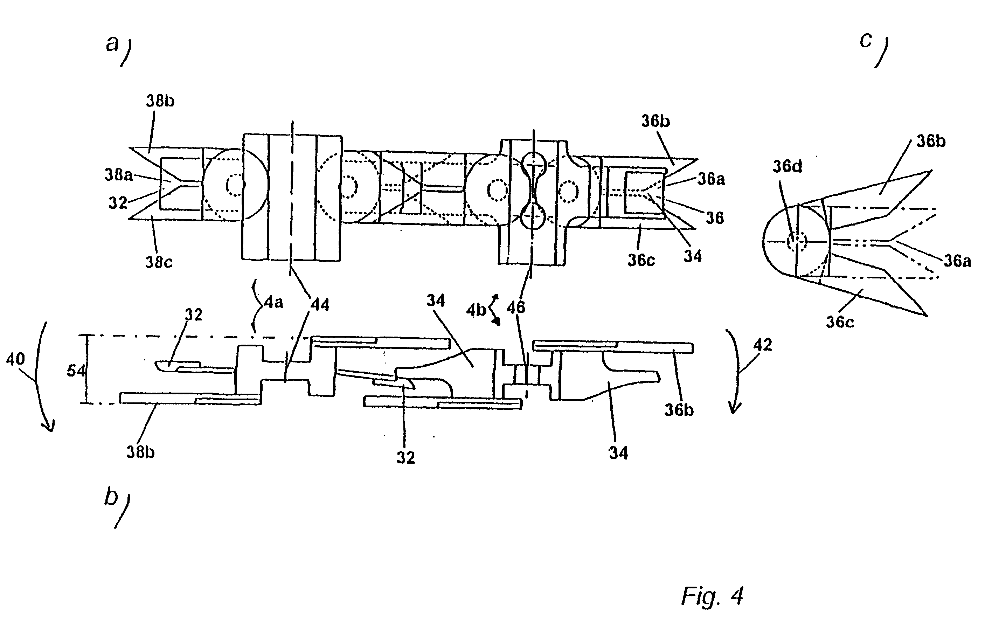

In Figur 4a bis c ist eine weitere Ausführungsform gezeigt, bei welcher die Formelemente 36 aus einzelnen Zentrierflügeln 36b und 36c bestehen, die um eine Achse 36d verstellbar sind, um den V-förmigen Bereich 36a in seiner Größe zu verändern, wie es in der Figur 4c in durchgezogenen Linien bzw. strichpunktierten Linien angedeutet ist. Ebenso lassen sich die einzelnen Zentrierflügel 38b und 38c des Formelementes 38 zur Veränderung des V-förmigen Bereiches 38a verändern.

Das erfindungsgemäße Verfahren läuft mit der erfindungsgemäßen Vorrichtung wie folgt ab. Wurstbrät wird durch den Trichter 28 in den Füllmaschinenhauptteil 30 eingebracht. Die nicht gezeigte Flügelzellenpumpe drückt das Wurstbrät durch das Füllrohr 20 in Richtung 22. Dabei wird in an sich bekannter Weise eine auf das Füllrohr aufgebracht Wursthülle gefüllt und dabei gleichzeitig von dem Füllrohr 20 abgezogen. Das mit Wurstbrät gefüllte Hüllenmaterial wird von den Endlosbändem 6 des Längengerätes 14 erfaßt, die von den Umlenkrollen 7 in Richtung 24 angetrieben werden. Nach Ausstoß einer Wurstbrätportion, die einer Wurst entspricht, wird der Füllgutaustoß synchron mit den Endlosbändem 6 gestoppt bzw. in der Geschwindigkeit reduziert. Der gefüllte Teil des abgezogenen Hüllenmaterials wird von den Endlosbändern 6 gehalten, während das Abdrehgetriebe 18 das Füllrohr 20 zusammen mit dem noch ungefüllten Teil des Hüllenmateriales, der sich auf dem Füllrohr befindet, gedreht wird. Auf diese Weise wird eine Abteilstelle 50, 48 durch Abdrehen erzeugt. Um eine ausreichende Spannung des Hüllenmateriales zu gewährleisten, ist ein hier nicht weiter interessierendes Bremsringgetriebe 16 vorgesehen. Der zeitliche Ablauf der Bewegung der Flügelzellenpumpe in dem Maschinenhauptteil 30, des Abdrehgetriebes 18, des Bremsringsgetriebes 16 und der Endlosbänder 6 wird von einer Steuerung 25 vorgenommen, die entsprechende elektrische Signale in hier nicht weiter interessierender Weise an die einzelnen Komponenten übermittelt.

Die zu einzelnen Würsten 12 abgedrehten Portionen des Wurststranges werden von den Endlosbändern 6 an der Trennvorrichtung 2 vorbeigeführt, deren Trennköpfe 4 seitlich zwischen die Endlosbänder eingreifen. Der Motor 2a der Trennvorrichtung 2, der die beiden Trennköpfe 4a und 4b antreibt, wird ebenso von der Steuerung 25 zu einer entsprechenden synchronen Bewegung angetrieben. Wie es weiter unten beschrieben wird, zerteilen die Trennköpfe 4a, b den Wurststrang an den Abteilstellen 50, 48, so daß einzelne Würste 8 entstehen, die von den Endlosbändem 6 weiterbefördert werden bis sie am Ende des Längengerätes 14 in einen Vorratsbehälter fallen oder weiterverarbeitet werden.

Treten die Trennelemente 5a, 5b, 5c, 5d der Trennköpfe 4a, b in Kontakt, so entsteht der Zustand der Figur 1a. Die Steuerung 25 sorgt dabei dafür, daß die Bewegung 24 der Würste 10 genau so schnell wie die Tangentialbewegung der äußeren Bereiche der Trennelemente oder auf andere vorbestimmte Weise an das Produkt angepaßt ist. Zuerst treten ein erstes Formelement 38 des Trennelementes 5b und eine Klinge 34 des Trennelementes 5c mit der vorlaufenden abzutrennenden Wurst 10 in Kontakt. Die konkave Ausbuchtung 35 der Klinge 34 und die vorlaufende Fläche des Formelementes 38 drücken dabei gegen die vorlaufende Wurst 10. Die weitere Drehbewegung der Trennköpfe 4a bzw. 4b in Richtung 40 bzw. 42 und die gleichzeitige lineare Fortbewegung 24 des Wurststranges 10 führt zu einem Zustand, der in Figur 1b gezeigt ist. Das erste Formelement 38 und das zweite Formelement 36 ziehen die zu trennenden Würste 10 auseinander, so daß die Abteilstelle 50 langgezogen wird. Figur 1c zeigt die Vorrichtung im Moment des Schnittes. Die Klinge 34 schneidet gegen den Gegenhalter 32 die Abteilstelle 50 durch. Währenddessen halten die Formelemente 38 und 36 die zu trennenden Würste auf einem definierten Abstand 54. Auf diese Weise entstehen einzelne Würste 8. Die einzelnen Würste 8 werden in Richtung 24 weitertransportiert, während die Trennköpfe 4a und 4b in Richtung 40 und 42 weitergedreht werden, so daß die Trennelemente 5b und 5c sich wieder auseinanderbewegen. Im folgenden greifen die Trennelemente 5a und 5d als Folge der Drehbewegung 40 bzw. 42 ineinander, um die nächste Abteilstelle 50 zu durchtrennen.

Während die Figuren 1a und 1c den Trennvorgang am Beispiel einer zusammengerutschten Abteilstelle 50, wie sie in Figur 6 gezeigt ist, darstellen, zeigen die Figuren 2a bis 2c denselben zeitlichen Ablauf, jedoch für einen Wurststrang mit dezentrierten Abteilstellen 48.

In Figur 2a ist zu erkennen, wie ein erstes Formelement 38 mit der Abteilstelle 48 in Wechselwirkung tritt. Bei weiterer Drehbewegung 40 des ersten Trennkopfes 4a bzw. der Drehbewegung 42 des Trennkopfes 4b und Fortbewegung des Wurststranges wird die dezentrierte Abteilstelle 48 entlang des V-förmigen Bereiches 38a in Richtung der Achse 52 des Wurststranges bewegt, wie es in Figur 2b zu sehen ist. Im Moment des Schnittes, der in Figur 2c gezeigt ist, befindet sich die Abteilstelle 48 direkt auf der Achse 52 der Würste 8. Ebenso wie die V-förmigen Bereiche 38a der ersten Formelemente 38 wirken die V-förmigen Bereiche 36a der zweiten Formelemente 36, wenn die Abteilstelle 48 in die andere Richtung gegenüber der Achse 52 des Wurststranges versetzt ist.

Abweichend von der beschriebenen Ausführungsform können anstelle der V-förmigen Bereiche andere zentrierende, z.B. U-förmige, Bereiche vorgesehen sein.

Die Trennköpfe 4a und 4b können mit einer gleichförmigen Geschwindigkeit umlaufen. Je nach Geschwindigkeit des Wurststranges und dem Abstand der Abteilstellen kann es jedoch notwendig sein, daß die Steuerung 25 während eines Umlaufes eines Trennkopfes 4a, 4b dessen Winkelgeschwindigkeit verändert So wird z.B. bei längeren Würsten, die mit hoher Geschwindigkeit von den Endlosbändern 6 befördert werden, nur während des Zeitbereiches, in dem die Trennelemente mit dem Wurststrang in Berührung sind, die Drehgeschwindigkeit der Trennköpfe 4a, 4b entsprechend der Geschwindigkeit des Wurststranges angepaßt sein, während in dem Zeitbereich, in dem kein Trennelement mit dem Wurststrang in Berührung ist, die Drehgeschwindigkeit langsamer gewählt wird, um längere Würste abteilen zu können.

Abweichend von den Ausführungsformen der Figuren 1 bis 3 zeigt die Figur 4 eine Ausführungsform, bei welcher die V-förmigen Zentrierbereiche 38a, 36a der Formelemente 36, 38 eingestellt werden können. Die Zentrierflügel 36b, 36c werden vor dem Beginn der Wurstbefüllung um die Achse 36b derart eingestellt, daß sie dem Kaliber der Würste und der seitlichen Ausdehnung der Abteilstellen entsprechen. Auf diese Weise läßt sich ein und dieselbe Wurstmaschine für verschieden starke Würste einsetzen.

Mit der erfindungsgemäßen Vorrichtung und der erfindungsgemäßen Verfahren ist es also möglich, im speziellen auch bei empfindlichem Naturdarm, Wurststränge zu unterteilen, deren Abteilstellen entweder sehr kurz oder überhaupt nicht auseinandergezogen sind. Durch die vor- bzw. nachlaufenden Formelemente 38, 36 ist ein konstanter Abstand der einzelnen Würste während des Schneidprozesses gewährleistet. Eine Ausführungsform mit ensprechenden Zentrierbereichen kann zusätzlich vorteilhaft für Wurststränge eingesetzt werden, deren Abteilstellen dezentriert sind.

## Patentansprüche

1. Trennvorrichtung (2) zum Trennen von Würsten (10, 12) an Abteilstellen (50), die zwischen den einzelnen Würsten (10, 12) eines Wurststranges gebildet sind, mit einer Transporteinrichtung (6) für den Wurststrang mit wenigstens einem ersten Trennelement (5a, 5b) auf einer ersten Seite des Wurststranges und wenigstens einem zweiten Trennelement (5c, 5d) auf der zweiten Seite des Wurststranges, wobei die Trennelemente derart angetrieben werden, daß sie auf Kreisbahnen (40, 42) um eine erste bzw. zweite Achse (44; 46), die senkrecht zur Transportrichtung des Wurststranges stehen, gegenläufig umlaufen und so angeordnet sind, daß das erste und das zweite Trennelement beim Umlauf derart zusammenwirken, daß der Wurststrang an den Abteilstellen durchtrennt wird,
**dadurch gekennzeichnet, daß**
beim ersten Trennelement (5a, 5b) ein erstes Formelement (38) mit umläuft, das dem ersten Trennelement (5a, 5b) auf dessen Kreisbahn (40) voranläuft, und
beim zweiten Trennelement (5c, 5d) ein zweites Formelement (36) mit umläuft, das dem zweiten Trennelement (5c, 5d) auf dessen Kreisbahn (42) nachläuft, so daß das erste und das zweite Formelement (38; 36) während des Eingriffes des ersten und des zweiten Trennelementes die zu trennenden Würste (10) auf einem vorbestimmten Abstand (54) halten.

2. Vorrichtung nach Anspruch 1,
**dadurch gekennzeichnet, daß**
entweder das erste (5a, 5b) oder das zweite Trennelement (5c, 5d) eine Klinge (34) umfaßt und das jeweils andere Trennelement einen Gegenhalter (32) umfaßt.

3. Vorrichtung nach Anspruch 2,
**dadurch gekennzeichnet, daß**
die Klinge (34) auf ihrer vorlaufenden Seite eine konkave Ausbuchtung (35) umfaßt.

4. Vorrichtung nach Anspruch 1,
**dadurch gekennzeichnet, daß**
sowohl das erste als auch das zweite Trennelement eine Klinge umfassen.

5. Vorrichtung nach einem der Ansprüche 2 und 3,
**dadurch gekennzeichnet, daß**
die Gegenhalter (32) elastisch ist oder federnd gelagert ist.

6. Vorrichtung nach einem der Ansprüche 1 bis 5,
**dadurch gekennzeichnet, daß**
die Formelemente (36; 38) flächige Elemente umfassen, die sich im wesentlichen parallel zu einer Linie erstrecken, die durch den Mittelpunkt des Umlaufkreises des jeweiligen Trennelementes geht.

7. Vorrichtung nach einem der Ansprüche 1 bis 6,
**dadurch gekennzeichnet, daß**
die Formelemente (36; 38) im wesentlichen V-förmige, sich in Richtung des Wurststranges öffnende Zentrierbereiche (36a; 38a) an ihren achsfernen Enden umfassen, die während des Eingriffs des ersten (5a, 5b) und des zweiten (5c, 5d) Trennelementes zu einer Zentrierung der Abteilstelle (48) führen.

8. Vorrichtung nach einem der Ansprüche 1 bis 7,
**dadurch gekennzeichnet, daß**
die Formelemente (36; 38) jeweils einstückig ausgebildet sind.

9. Vorrichtung nach Anspruch 7,
**dadurch gekennzeichnet, daß**
die Formelemente (36; 38) jeweils aus verstellbaren Zentrierflügeln (36b, 36c; 38b, 38c) bestehen, die einen veränderbaren Winkel zwischen sich einschließen, der den V-förmigen Zentrierbereich (36a: 38a) bildet.

10. Vorrichtung nach einem der Ansprüche 1 bis 9,
**gekennzeichnet durch**
einen während eines Umlaufes drehzahlregelbaren Antrieb (2a) für die Trennelemente (5a, 5b, 5c, 5d) mit den dazugehörigen Formelementen (38, 36).

11. Vorrichtung nach Anspruch 10,
**dadurch gekennzeichnet, daß**
die Trennelemente (5a, 5b, 5c, 5d) derart angetrieben werden, daß sie im Eingriffsbereich mit dem Wurststrang eine Geschwindigkeit haben, die der Geschwindigkeit der Transporteinrichtung (6, 7) angepaßt ist.

12. Vorrichtung nach einem der Ansprüche 1 bis 11,
**dadurch gekennzeichnet, daß**
sich auf jeder Seite des zu befördernden Wurststranges je zwei Trennelemente (5a, 5b; 5c, 5d) mit jeweiligen Formelementen (38; 36) befinden, die auf einer gemeinsamen Achse (44; 46) umlaufen.

13. Verfahren zum Zerteilen von Wurststrängen an Abteilstellen in einzelne Würste oder Wurstketten mit gleicher Anzahl von Würsten, wobei der Wurststrang an eine Trennvorrichtung herangeführt wird und eine Abteilstelle zwischen zwei Würsten durch Eingriff umlaufender Trennelemente zerschnitten, **dadurch gekennzeichnet, daß** der Wurststrang in einem gleichzeitigen Arbeitsschritt von jeweils mit den Trennelementen umlaufenden Formelementen auf einen gewünschten Abstand auseinandergezogen wird.

14. Verfahren nach Anspruch 13,
**dadurch gekennzeichnet, daß**
die Abteilstelle (48, 50) gleichzeitig mit dem Auseinanderziehen entlang der Längsachse (52) des Wurststrangen zentriert wird.

## Claims

1. A separation device (2) for separating sausages (10; 12) at separation points (50) formed between individual sausages of a sausage strand, comprising a transport means (6) for the sausage strand provided with at least one first separation element (5a, 5b) on a first side of the sausage strand and at least one second separation element (5c, 5d) on the second side of the sausage strand, said separation elements being driven such that they circulate in opposite directions on circular paths (40, 42) about a first and a second axle (44; 46), which extend at right angles to the direction of transport of the sausage strand, and being arranged such that, while circulating, said first and second separation elements cooperate such that the sausage strand is cut through at the separation points,
**characterized in**
**that** a first forming element (38) circulates together with the first separation element (5a, 5b), said first forming element (38) preceding said first separation element (5a, 5b) on its circular path (40), and
**that** a second forming element (36) circulates together with the second separation element (5c, 5d), said second forming element (36) following said second separation element (5c, 5d) on its circular path (42) so that said first and second forming elements (38; 36) hold the sausages to be separated (10) at a predetermined distance (54) during engagement of the first and second separation elements.

2. A device according to claim 1,
**characterized in that**
either the first (5a, 5b) or the second separation element (5c, 5d) comprises a blade (34) and that the respective other separation element comprises a countersupport (32).

3. A device according to claim 2,
**characterized in that**
the blade (34) is provided with a concave indentation (35) on the leading side thereof.

4. A device according to claim 1,
**characterized in that**
the first as well as the second separation element comprise a blade.

5. A device according to one of the claims 2 and 3,
**characterized in that**
the countersupport (32) is elastic or resiliently supported.

6. A device according to one of the claims 1 to 5,
**characterized in that**
the forming elements (36; 38) comprise platelike elements which extend substantially parallel to a line extending through the centre of the circular path of the respective separation element.

7. A device according to one of the claims 1 to 6,
**characterized in that**
the forming elements (36; 38) comprise essentially V-shaped centering areas (36a; 38a), which open in the direction of the sausage strand, at their ends located remote from the axle, said centering areas (36a; 38a) causing the separation point (48) to be centered during engagement of the first (5a, 5b) and the second (5c, 5d) separation elements.

8. A device according to one of the claims 1 to 7,
**characterized in that**
the forming elements (36; 38) are each implemented as a one-piece component.

9. A device according to claim 7,
**characterized in that**
each of the forming elements (36; 38) consists of adjustable centering vanes (36b, 36c; 38b, 38c) including a variable angle between them, said variable angle defining the V-shaped centering area (36a; 38a).

10. A device according to one of the claims 1 to 9,
**characterized by**
a drive means (2a) for the separation elements (5a, 5b, 5c, 5d), which is speed-controllable during a rotation, and by the associated forming elements (38, 36).

11. A device according to claim 10,
**characterized in that**
the separation elements (5a, 5b, 5c, 5d) are driven such that, in the area of engagement with the sausage strand, they move at a speed which is adapted to the speed of the transport means (6, 7).

12. A device according to one of the claims 1 to 11,
**characterized in that**
on either side of the sausage strand to be conveyed, two separation elements (5a, 5b; 5c, 5d) and the respective forming elements (38; 36) are provided, which circulate about a common axle (44; 46).

13. A method of dividing sausage strands at separation points into individual sausages or chains of sausages comprising identical numbers of sausages, comprising the steps of moving the sausage strand into contact with a separation device and cutting through a separation point between two sausages by engagement of circulating separation elements,
**characterized in that**, in a simultaneous operating step, the sausage strand is drawn apart to a desired distance by forming elements circulating together with said separation elements.

14. A method according to claim 13,
**characterized in that**,
while being drawn apart, the separation point (48, 50) is centered along the longitudinal axis (52) of the sausage strand.

## Revendications

1. Dispositif de séparation (2) pour séparer des saucisses (10, 12) en des zones de sectionnement (50) formées entre les saucisses (10, 12) d'un boudin de saucisse, comprenant un dispositif de transport (6) pour le boudin de saucisse, muni d'au moins un premier élément de séparation (5a, 5b) sur un premier côté du boudin de saucisse et d'au moins un deuxième élément de séparation (5c, 5d) sur le deuxième côté du boudin de saucisse, les éléments de séparation étant actionnés de telle sorte qu'ils tournent en sens opposé l'un de l'autre sur des trajectoires circulaires (40, 42), autour d'un premier axe et d'un deuxième axe (44, 46) respectivement, qui sont perpendiculaires à la direction de transport (24) du boudin de saucisse, et étant disposés de telle sorte que le premier et le deuxième élément de séparation coopèrent pendant la rotation de manière à sectionner le boudin de saucisse aux zones de sectionnement,
**caractérisé en ce que**
un premier élément de forme (38), tourne avec le premier élément de séparation (5a, 5b) et précède le premier élément de séparation (5a, 5b) sur la trajectoire circulaire (40) de celui-ci, et
un deuxième élément de forme (36), tourne avec le deuxième élément de séparation (5c, 5d) et suit le deuxième élément de séparation (5c, 5d) sur la trajectoire circulaire (42) de celui-ci,
de telle sorte que, pendant la mise en prise des premier et deuxième éléments de séparation, les premier et deuxième éléments de forme (38 ; 36) maintiennent les saucisses (10) à séparer à une distance (54) prédéfinie.

2. Dispositif selon la revendication 1,
**caractérisé en ce que**
soit le premier (5a, 5b), soit le deuxième élément de séparation (5c, 5d) comporte une lame (34) et que l'autre élément de séparation correspondant comporte une contre-butée (32).

3. Dispositif selon la revendication 2,
**caractérisé en ce que**
la lame (34) comporte un creux concave (35) sur sa face tournée vers l'avant.

4. Dispositif selon la revendication 1,
**caractérisé en ce que**
aussi bien le premier que le deuxième élément de séparation sont munis d'une lame.

5. Dispositif selon les revendications 2 et 3,
**caractérisé en ce que**
la contre-butée (32) est élastique ou est montée avec effet de ressort.

6. Dispositif selon l'une des revendications 1 à 5,
**caractérisé en ce que**
les éléments de forme (36 ; 38) comportent des éléments plats, qui s'étendent sensiblement parallèlement à une ligne qui passe par le centre de la trajectoire circulaire de l'élément de séparation correspondant.

7. Dispositif selon l'une des revendications 1 à 6,
**caractérisé en ce que**
les éléments de forme (36 ; 38) comportent, sur leurs extrémités éloignées de l'axe, des zones de centrage (36a ; 38a) sensiblement en forme de V, ouvert en direction du boudin de saucisse, lesquelles provoquent un centrage de la zone de sectionnement (48) pendant la mise en prise du premier élément de séparation (5a, 5b) et du deuxième élément de séparation (5c, 5d).

8. Dispositif selon l'une des revendications 1 à 7,
**caractérisé en ce que**
les éléments de forme (36 ; 38) sont réalisés chacun en une seule pièce.

9. Dispositif selon la revendication 7,
**caractérisé en ce que**
les éléments de forme (36 ; 38) sont formés chacun par des ailes de centrage (36b, 36c ; 38b, 38c) réglables, qui définissent entre elles un angle variable qui forme la zone de centrage (36a ; 38a) en forme de V.

10. Dispositif selon l'une des revendications 1 à 9,
**caractérisé par**
un moteur (2a) à vitesse variable pendant une rotation, pour les éléments de séparation (5a, 5b, 5c, 5d) avec les éléments de forme (38, 36) qui leur sont associés.

11. Dispositif selon la revendication 10,
**caractérisé en ce que**
les éléments de séparation (5a, 5b, 5c, 5d) sont actionnés de telle sorte que, dans la zone de prise avec le boudin de saucisse, ils ont une vitesse adaptée à la vitesse du dispositif de transport (6, 7).

12. Dispositif selon l'une des revendications 1 à 11,
**caractérisé en ce que**
sur chaque côté du boudin de saucisse à acheminer se trouvent deux éléments de séparation (5a, 5b, 5c, 5d) avec des éléments de forme (38 ; 36) correspondants, qui tournent sur un axe commun (44 ; 46).

13. Procédé pour séparer des boudins de saucisse en des zones de sectionnement pour former des saucisses individuelles ou des chapelets de saucisses ayant un nombre identique de saucisses, le boudin de saucisse étant acheminé vers un dispositif de séparation et une zone de sectionnement étant sectionnée entre deux saucisses par mise en prise d'éléments de séparation rotatifs,
**caractérisé en ce que**
le boudin de saucisse est étiré sur une distance souhaitée dans une étape de travail simultanée par des éléments de forme tournant avec chacun des éléments de séparation.

14. Procédé selon la revendication 13,
**caractérisé en ce que**
la zone de sectionnement (48, 50) est centrée, simultanément avec l'étirement, le long de l'axe longitudinal (52) du boudin de saucisse.
